# EUROPEAN PATENT APPLICATION

(11) **EP 4 283 261 A1**
(43) Date of publication of application: **29.11.2023**
(21) Application number: 22742558.4
(22) Date of filing: 18.01.2022
(51) Int. Cl.: G01H 11/08, G01H 17/00, G01M 99/00, G01C 19/00

(54) **GYRO VIBROMETER, ELECTRONIC DEVICE, AND ELECTRONIC SYSTEM**

(30) Priority: 19.01.2021 JP 2021006731; 26.04.2021 JP 2021074365
(71) Applicant: Kyocera Corporation, Kyoto-shi Kyoto 612-8501 (JP)
(72) Inventor: SOEJIMA, Munetaka, Kyoto-shi, Kyoto 612-8501 (JP)
(74) Representative: TBK
(86) International application number: PCT/JP2022/001526
(87) International publication number: WO 2022/158436

(57) **Abstract**

There is provided a gyro vibrometer configured to detect vibration of a subject with high sensitivity. The gyro vibrometer includes a support body including an opening portion, a film disposed on the support body in which part of the film is located over the opening portion, and at least one gyro sensor disposed on a surface on the opening side of the film.

## Description

### TECHNICAL FIELD

The present disclosure relates to a gyro vibrometer, an electronic device, and an electronic system.

### BACKGROUND OF INVENTION

A vibrometer configured to detect vibration as a physical quantity is known. An example of the vibrometer is a gyro-vibrometer. A gyro vibrometer includes a gyro sensor and detects a physical quantity in accordance with vibration based on an angular velocity detected by the gyro sensor.

### CITATION LIST

### PATENT LITERATURE

Patent Document 1: JP 2019-056652 A

### SUMMARY

A gyro vibrometer according to an aspect of the present disclosure includes a support body including an opening portion, a film disposed on the support body in which part of the film is located over the opening portion, and at least one gyro sensor disposed on a surface on the opening side of the film.

### BRIEF DESCRIPTION OF THE DRAWINGS

FIG. 1 is a schematic diagram illustrated in an overview of an electronic system according to an aspect of the present disclosure.
FIG. 2 is a cross-sectional view taken along a line I-I in a gyro vibrometer in FIG. 1.
FIG. 3 is a plan view of a gyro vibrometer according to an aspect of the present disclosure when viewed from the side of a control substrate.
FIG. 4 is a plan view of a gyro vibrometer according to an aspect of the present disclosure when viewed from the side of a control substrate.
FIG. 5 is a plan view of a gyro vibrometer according to an aspect of the present disclosure when viewed from the side of a control substrate.
FIG. 6 is a plan view of a gyro vibrometer according to an aspect of the present disclosure when viewed from the side of a control substrate.
FIG. 7 is a plan view of a gyro vibrometer according to an aspect of the present disclosure when viewed from the side of a control substrate.
FIG. 8 is a plan view of a gyro vibrometer according to an aspect of the present disclosure when viewed from the side of a control substrate.
FIG. 9 is a plan view of a gyro vibrometer according to an aspect of the present disclosure when viewed from the side of a control substrate.
FIG. 10 is a plan view of a gyro vibrometer according to an aspect of the present disclosure when viewed from the side of a control substrate.
FIG. 11 is a plan view of a gyro vibrometer according to an aspect of the present disclosure when viewed from the side of a control substrate.
FIG. 12 is a diagram illustrating an example of a gyro sensor of a gyro vibrometer according to an aspect of the present disclosure.
FIG. 13 is a graph depicting a change in inclination of a film per unit time in response to vibration of a predetermined frequency.
FIG. 14 is a plan view of a gyro vibrometer according to an aspect of the present disclosure when viewed from the side of a control substrate.
FIG. 15 is a plan view of a gyro vibrometer according to an aspect of the present disclosure when viewed from the side of a control substrate.
FIG. 16 is a diagram depicting detection signals corresponding to vibration detected by two gyro sensors.
FIG. 17 is a plan view of a gyro vibrometer according to an aspect of the present disclosure when viewed from the side of a control substrate.
FIG. 18 is a diagram depicting detection signals corresponding to vibration detected by two gyro sensors.
FIG. 19 is a plan view of a gyro vibrometer according to an aspect of the present disclosure when viewed from the side of a control substrate.
FIG. 20 is a diagram depicting detection signals corresponding to vibration detected by two gyro sensors.
FIG. 21 is a plan view of a gyro vibrometer according to an aspect of the present disclosure when viewed from the side of a control substrate.
FIG. 22 is a diagram depicting detection signals corresponding to vibration detected by two gyro sensors.
FIG. 23 is a schematic diagram illustrating an overview of an electronic system according to an aspect of the present disclosure.

### DESCRIPTION OF EMBODIMENTS

### First Embodiment

An embodiment of the present disclosure will be described in detail below. Unless otherwise specified in the present specification, the expression "X to Y" representing a numerical value range is intended to mean "X or more and Y or less".

### Overview of Electronic System 1000

An electronic system 1000 according to an aspect of the present disclosure is configured to detect vibration of a subject and generate sound corresponding to the detected vibration. In other words, the electronic system 1000 detects vibration of the subject and generates sound corresponding to a frequency band of a component included in the detected vibration. In this case, the vibration of the subject may be vibration of a solid, a liquid, or a gas. The frequency band of the component included in the vibration may be, for example, a frequency band corresponding to an audible sound or a frequency band corresponding to an ultrasonic wave. The electronic system 1000 according to the present disclosure may be applied to, for example, a stethoscope, a nondestructive inspection, and an internal operation check of a precision machine. Hereinafter, "vibration of the subject" is also referred to as "vibration from the subject".

In the present embodiment, a case where the electronic system 1000 is applied to a stethoscope will be described as an example. The electronic system 1000 detects vibration derived from, for example, breathing of a subject (for example, a patient), pulsation of the heart, blood flow in a blood vessel, or movement of the digestive tract (for example, peristaltic movement), and generates sound corresponding to a frequency band of a component included in the detected vibration.

### Configuration of Electronic System 1000

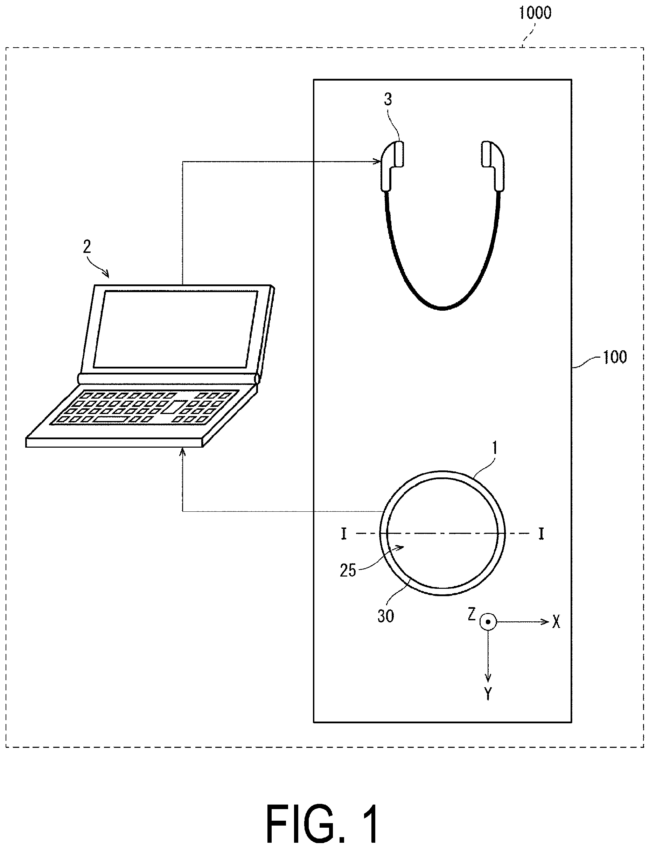

First, an overview of the electronic system 1000 according to an aspect of the present disclosure will be described using FIG 1. FIG. 1 is a schematic diagram of the electronic system 1000 according to an aspect of the present disclosure.

The electronic system 1000 includes an electronic device 100 and a sound generation device 2.

### Configuration of Electronic Device 100

As illustrated in FIG. 1, the electronic device 100 includes a gyro vibrometer 1 and a sound output unit 3. FIG. 1 illustrates a configuration of the electronic device 100 including one gyro vibrometer 1 and one sound output unit 3; however, the configuration thereof is not limited thereto. For example, the electronic device 100 may be configured to include a plurality of sound output units 3 with respect to one gyro vibrometer 1. This allows a plurality of users (for example, medical personnel) to simultaneously hear the sound corresponding to the vibration detected by the gyro vibrometer 1.

The gyro vibrometer 1 and the sound output unit 3 may be wirelessly connected to each other. In the case of wireless connection, for example, Bluetooth (registered trade name), Wi-Fi (registered trade name), or the like may be used for the connection. With this, even when the gyro vibrometer 1 and the sound output unit 3 are located away from each other, a sound corresponding to a detection signal may be output.

FIG. 1 illustrates a configuration in which the gyro vibrometer 1 and the sound output unit 3 are wirelessly connected to each other, but the configuration is not limited thereto. The gyro vibrometer 1 and the sound output unit 3 may be connected to each other by wire.

Although the electronic device 100 does not include the sound generation device 2 in FIG. 1, the electronic device 100 may include the sound generation device 2. When the electronic device 100 includes the sound generation device 2, a control substrate 40 described below, for example, may be equipped with the sound generation function.

### Configuration of Gyro Vibrometer 1

The gyro vibrometer 1 is capable of detecting vibration of a subject by being brought into contact with the subject. When the subject is the body of a patient, the gyro vibrometer 1 may be brought into contact with the chest, back, wrist, neck, abdomen, or the like of the patient. The gyro vibrometer 1 may be configured such that the vibration of the subject is received by a film 20 described below and then vibration generated in the film 20 is detected. The gyro vibrometer 1 transmits a detection signal corresponding to the detected vibration.

The electronic device 100 illustrated in FIG. 1 includes one gyro vibrometer 1, but is not limited thereto. For example, the electronic device 100 may include a plurality of gyro vibrometers 1. As an example, the electronic device 100 may include a plurality of gyro vibrometers 1 each capable of detecting a different frequency, or may include a plurality of gyro vibrometers 1 each capable of detecting the same frequency. When the electronic device 100 includes a plurality of gyro vibrometers 1, the plurality of gyro vibrometers 1 may be arranged at positions point-symmetrical to each other.

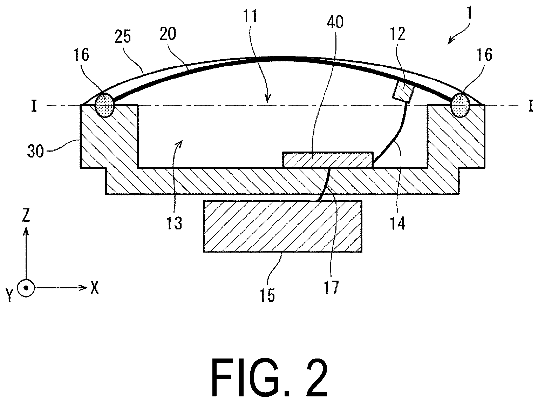

A configuration of the gyro vibrometer 1 according to an aspect of the present disclosure will be described using FIG. 2. FIG. 2 is a cross-sectional view taken along a line I-I in the gyro vibrometer 1 illustrated in FIG. 1. As illustrated in FIG. 2, the gyro vibrometer 1 according to the aspect of the present disclosure includes the film 20, a support body 30, a gyro sensor 12, the control substrate 40, a covering portion 25, and a battery 15.

The above configuration makes it possible to detect the vibration of the subject. To be specific, for example, the gyro vibrometer 1 may detect vibrations of from 20 Hz to 20000 Hz.

### Film 20

The film 20 receives the vibration from the subject. The film 20 deforms in response to the received vibration. The film 20 is disposed on the support body 30, thus part of the film 20 is located over an opening portion 11.

### (1) Physical Properties of Film

The gyro vibrometer 1 detects vibration by the deformation of the film 20. Accordingly, physical properties that determine the degree of deformation of the film 20, such as the film thickness of the film 20, Young's modulus of the film 20, the density of the film 20, the receivable sound velocity of the film, and the like, that is, the material used for the film 20 and the shape of the film have influence on the vibration detection sensitivity of the gyro vibrometer 1.

The film 20 may have a film thickness of from 10 µm to 5000 µm. From the viewpoint of receiving vibration with high sensitivity, the film thickness may be from 20 µm to 2000 µm or may be from 50 µm to 1000 µm. The film thickness of the film 20 may be uniform over the entirety of the film or may vary depending on parts of the film 20.

The Young's modulus of the film 20 may be from 0.1 MPa to 1000 GPa. From the viewpoint of receiving vibration with high sensitivity, it may be from 0.5 to 500 GPa, or may be from 1 MPa to 400 GPa. In this case, the method for measuring the Young's modulus of the film 20 is not particularly limited, but the Young's modulus is measured by a three-point bending test method, for example.

The density of the film 20 may be from 100 to 5000 kg/m³. From the viewpoint of receiving vibration with high sensitivity, it may be from 500 to 4000 kg/m³ or from 800 to 2000 kg/m³.

The vibration reception sensitivity of the film 20 may be evaluated by the sound velocity (m/s) of vibration that can be received. As the sound velocity of the vibration that can be received by the film 20 is higher, the vibration reception sensitivity of the film 20 may be said to be higher. The sound velocity is obtained by dividing the value of the Young's modulus by the value of the density. Therefore, the following may be said for the film 20: the higher the Young's modulus and the lower the density, the higher the sound velocity of the vibration that can be received, that is, the higher the sensitivity of the film 20. The sound velocity of the vibration that the film 20 can receive may be from 10 to 20000 m/s. From the viewpoint of receiving vibration with high sensitivity, the sound velocity may be from 100 to 15000 m/s or may be from 1000 to 15000 m/s.

The material of the film 20 is not particularly limited as long as the film thickness, Young's modulus, density, and sound velocity of the material fall within the above-described ranges, and examples of the material include silicone, glass epoxy, acrylonitrile butadiene styrene (ABS), carbon fiber reinforced plastic (CFRP), urethane, and epoxy. From the viewpoint of receiving vibration with high sensitivity, silicone, glass epoxy, and CFRP may be used, or CFRP may be used.

The film 20 having different physical properties may be selected in accordance with the frequency of vibration to be detected. For example, when high-frequency vibration is to be detected, a hard material, that is, a material having a high Young's modulus may be selected as the film 20. Also, the film thickness of the film 20 may be increased. When low-frequency vibration is to be detected, a soft material, that is, a material having a low Young's modulus may be selected as the film 20. Also, the film thickness of the film 20 may be decreased. When the electronic device 100 includes the plurality of gyro vibrometers 1, for example, each of the gyro vibrometers 1 may include the film 20 having different physical properties.

### (2) Shape of Film

The film 20 is disposed on the support body 30. The film 20 may be disposed to cover the entirety of the opening portion 11. Since the film 20 covers the entirety of the opening portion 11, a surface area of the film 20, which receives the vibration from the subject, is large, thereby making it possible to receive the vibration with high sensitivity.

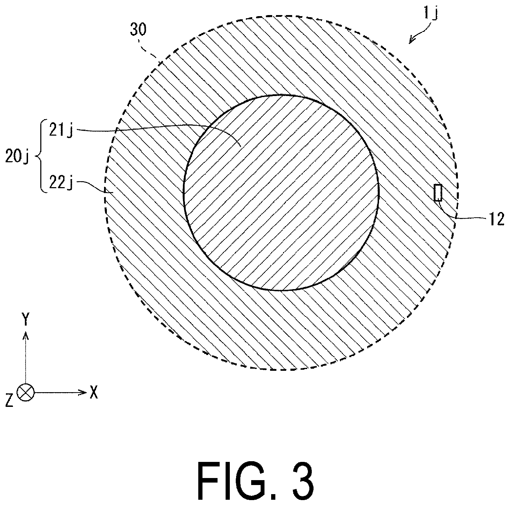

A form of the gyro vibrometer in which the film 20 covers the entirety of the opening portion 11 will be described below. FIG. 3 is a plan view of a gyro vibrometer 1j viewed from the side of a control substrate when a film 20j covers the entirety of the opening portion 11. In FIG. 3, the film 20j includes a central region 21j covering the center of the opening portion 11 and a peripheral region 22j extending from the central region 21j to the support body 30. FIG. 3 illustrates an example in which the shape of a portion constituted by the edge of the support body 30 is circular; however, the shape of the above portion is not limited thereto, and may be elliptical, polygonal, or the like.

When the film 20j covers the entirety of the opening portion 11, the film 20j may be a single film made of a single material, or the central region 21j and the peripheral region 22j of the film 20j may be made of mutually different materials. When the central region 21j and the peripheral region 22j are made of different materials, the central region 21j may be made harder than the peripheral region 22j. For example, the central region 21j and the peripheral region 22j may be made of materials having mutually different Young's moduli. The Young's modulus of the central region 21j may be higher than that of the peripheral region 22. Thus, the vibration may be received with high sensitivity.

Examples of the material of the central region 21j include silicone, glass epoxy, acrylonitrile butadiene styrene (ABS), carbon fiber reinforced plastic (CFRP), urethane, epoxy, aluminum, copper, iron, chromium, gold, silver, titanium, alumina, zirconia, aluminum nitride, and glass. Examples of the material of the peripheral region 22j include silicone, glass epoxy, acrylonitrile butadiene styrene (ABS), carbon fiber reinforced plastic (CFRP), urethane, and epoxy.

On the other hand, the central region 21j may be softer than the peripheral region 22j. In this case, for example, when the film 20j receives vibration from the subject, the film 20j and the subject may be easily brought into contact with each other.

The central region 21j and the peripheral region 22j may have different thicknesses from each other. In this case, for example, a variation in sympathetic vibration characteristics due to manufacture may be corrected/adjusted with ease.

The film 20 may be disposed to partially cover the opening portion 11. When the film 20 is disposed to partially cover the opening portion 11, the surface area, weight, and the like of the film 20 may be adjusted.

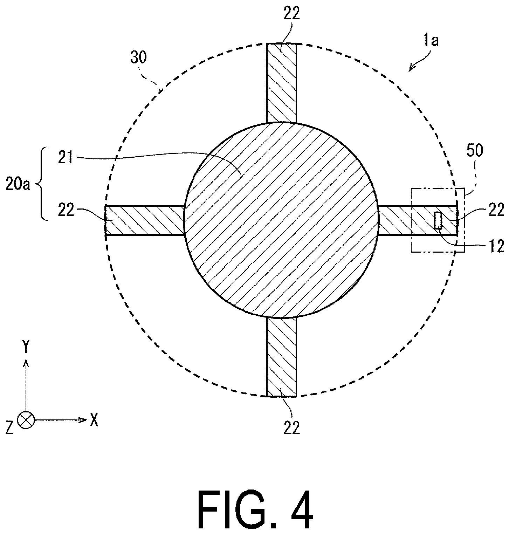

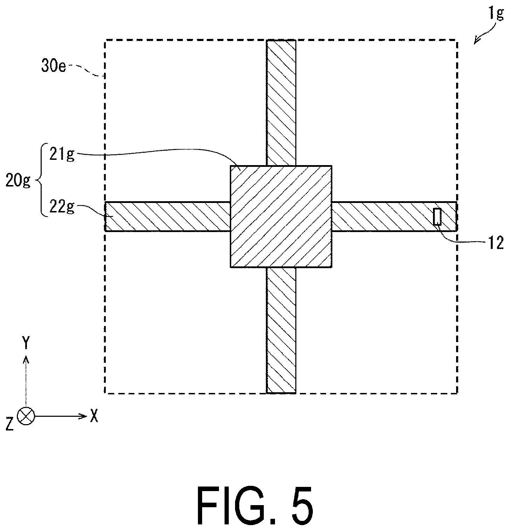

The shape of the film 20 when partially covering the opening portion 11 will be described with reference to FIGs. 4 to 11. FIGs. 4 to 11 are plan views of gyro vibrometers 1a to 1h when viewed from the side of a control substrate. In each of FIGs. 4 to 11, a portion other than the film surrounded by the support body 30 or a support body 30e corresponds to the opening portion 11. In FIGs. 4 to 11, each of the gyro vibrometer 1a and gyro vibrometers 1b to 1h includes one gyro sensor 12 at a position on the film 20 near the support body 30. Details of the arrangement of the gyro sensor 12 will be described below. FIGs. 4, 6, 8, and 10 each illustrate an example in which the portion constituted by the edge of the support body 30 is circular, while FIGs. 5, 7, 9, and 11 each illustrate an example in which the portion constituted by the edge of the support body 30 is quadrilateral. However, the present disclosure is not limited thereto, and the shape of the portion constituted by the edge of the support body 30 may be elliptical, polygonal, or the like.

The gyro vibrometer 1 may include a peripheral region 22 extending in a strip shape from a central region 21 to the support body 30. In FIG. 4, a film 20a of the gyro vibrometer 1a includes the central region 21 covering the center of the opening portion 11 and the plurality of peripheral regions 22 extending from the central region 21 to the support body 30. With this, the vibration may be received with high sensitivity and detected. As an example, the central region 21 may have a circular shape, and may be disposed in a region including the center of a circle constituted by the edge of the support body 30. The outer periphery of the central region 21 may be arranged such that any point on the outer periphery is equidistant from the point to the nearest edge of the support body 30 (the portion indicated by a dotted line in FIG. 4). The shape of the central region 21 is not limited thereto, and may be elliptical, polygonal, or the like.

In the gyro vibrometer 1a, there are four peripheral regions 22, and each of the peripheral regions 22 may have the same length. Alternatively, the peripheral regions 22 facing each other may have the same length, and the peripheral regions 22 adjacent to each other may have different lengths.

The central region 21 and the peripheral region 22 may be made of the same material, or may be made of different materials. When made of different materials, the central region 21 may be harder than the peripheral region 22. Thus, the vibration may be received with high sensitivity. Examples of the material of the central region 21 include silicone, glass epoxy, acrylonitrile butadiene styrene (ABS), carbon fiber reinforced plastic (CFRP), urethane, epoxy, aluminum, copper, iron, chromium, gold, silver, titanium, alumina, zirconia, aluminum nitride, and glass. Examples of the material of the peripheral region 22 include silicone, glass epoxy, acrylonitrile butadiene styrene (ABS), carbon fiber reinforced plastic (CFRP), urethane, and epoxy.

On the other hand, the central region 21 may be softer than the peripheral region 22. In this case, for example, when the film 20a receives vibration from the subject, the film 20a and the subject may be easily brought into contact with each other.

The central region 21 and the peripheral region 22 may have different thicknesses from each other. In this case, for example, a variation in sympathetic vibration characteristics due to manufacture may be corrected and/or adjusted with ease.

In FIG. 4, the gyro vibrometer 1a includes one gyro sensor 12 on the peripheral region 22. Although the arrangement of the gyro sensor 12 will be described in detail below, the gyro sensor 12 may be arranged not on the central region 21 but on the peripheral region 22. The number of gyro sensors 12 is not limited to one, and a plurality of gyro sensors may be provided on the film 20.

The central region 21 may have a surface area equal to or larger than a predetermined surface area, thereby receiving vibration from the subject. However, when the surface area is too large, the peripheral region 22 which positions the gyro sensor 12 becomes short. Therefore, the surface area of the central region 21 may be from 10% to 80% with respect to the surface area of the circle constituted by the edge of the support body 30.

In FIG. 5, a film 20g of the gyro vibrometer 1g includes a central region 21g at a portion including the center of a quadrilateral constituted by the edge of the support body 30e, and a peripheral region 22g extending from the central region 21g to the support body 30e. The central region 21g corresponds to a shape obtained by reducing the quadrilateral constituted by the edge of the support body 30e. In other words, the diagonal lines of the quadrilateral constituted by the edge of the support body 30e and the diagonal lines of the central region 21g may be arranged to overlap with each other. Each peripheral region 22g may be disposed to include a line connecting the center of each side of the quadrilateral constituted by the edge of the support body 30e and the center of each side of the central region 21g.

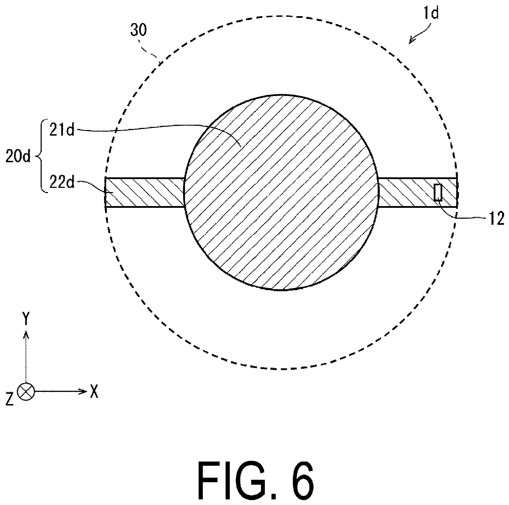

In FIG. 6, a film 20d of the gyro vibrometer 1d includes a central region 21d and a peripheral region 22d. The gyro vibrometer 1d may be said to be in a mode in which two peripheral regions 22 with a longitudinal direction in a Y-axis direction are removed from the gyro vibrometer 1a illustrated in FIG. 4. The surface area of the film 20d is smaller and the weight of the entirety of the film 20d is lighter than those of the film 20a of the gyro vibrometer 1a illustrated in FIG. 4, and therefore the film 20d is likely to deform in response to vibration.

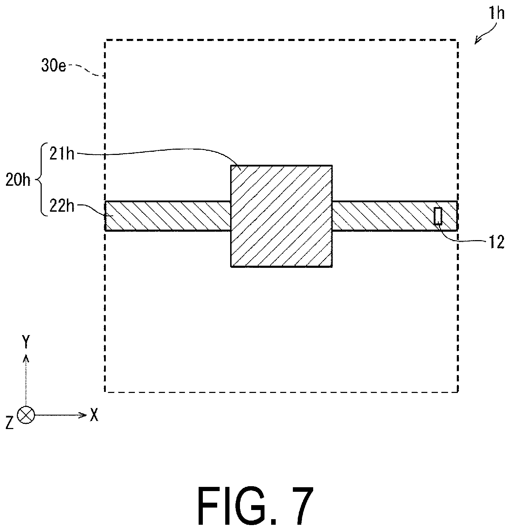

In FIG. 7, a film 20h of the gyro vibrometer 1h includes a central region 21h and a peripheral region 22h. The gyro vibrometer 1h may be said to have a form in which two peripheral regions 22g with a longitudinal direction in the Y-axis direction are removed from the gyro vibrometer 1g illustrated in FIG. 5. The surface area of the film 20h is smaller and the weight of the entirety of the film 20h is lighter than those of the film 20g of the gyro vibrometer 1g illustrated in FIG. 5, and therefore the film 20h is likely to deform in response to vibration.

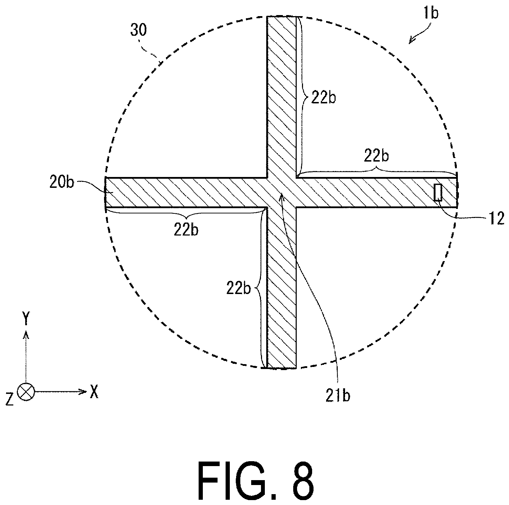

In FIG. 8, a film 20b of the gyro vibrometer 1b has a + (plus) shape. A central region 21b of the film 20b having the + shape is disposed to include the center of the circle constituted by the edge of the support body 30. In FIG. 8, an example is cited in which the film 20b includes a peripheral region 22b with a longitudinal direction on an X-axis and a peripheral region 22b with a longitudinal direction on the Y-axis, and these peripheral regions are formed to intersect each other at right angles. However, the present disclosure is not limited thereto. For example, the film 20b of the + shape need not form the intersection point at right angles. The film 20b may be obtained by cutting a single film into the + shape, or may have a form in which two strip-shaped films intersect each other. When the film 20b has the form in which two strip-shaped films intersect each other, the two films may be made of different materials or may be made of the same material.

The film 20b in FIG. 8 may also be said to have a form in which the central region 21 having a circular shape is removed from the film 20a in FIG. 4. Although the film 20b in FIG. 8 has a smaller surface area, which receives vibration from the subject, than the film 20a in FIG. 4, the weight of the entirety of the film is reduced, which makes the film 20b likely to deform in response to vibration.

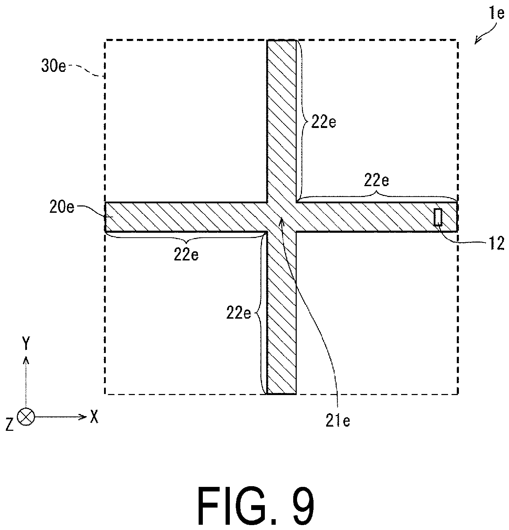

In FIG. 9, the shape of the support body 30e of the gyro vibrometer 1e is quadrilateral. Similarly to the film 20b in FIG. 8, a film 20e is formed in a + shape. Each end portion of the film 20e is fixed at a position including the center of each side of the quadrilateral support body 30e. The film 20e in FIG. 9 may also be said to have a form in which the central region 21g formed in a quadrilateral shape is removed from the film 20g in FIG. 5. Although the film 20e in FIG. 9 has a smaller surface area, which receives vibration from the subject, than the film 20g in FIG. 5, the weight of the entirety of the film is reduced, which makes the film 20e likely to deform in response to vibration.

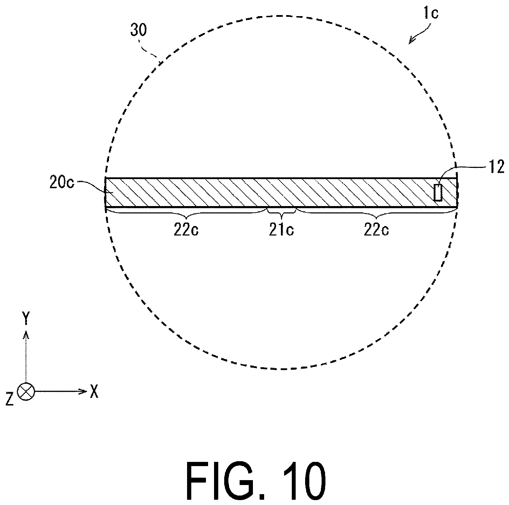

In FIG. 10, a film 20c of the gyro vibrometer 1c has a thin strip shape and is disposed at a position corresponding to a diameter of the circle constituted by the edge of the support body 30. Both ends of the film 20c are fixed at point-symmetrical positions that take the center of the circle constituted by the edge of the support body 30 as a symmetry point. The film 20c in FIG. 10 may also be said to have a form in which the peripheral region 22b with a longitudinal direction in the Y-axis direction is removed from the film 20b in FIG. 8. Although the film 20c in FIG. 10 has a smaller surface area, which receives vibration from the subject, than the film 20b in FIG. 8, the weight of the entirety of the film is reduced, which makes the film 20c likely to deform in response to vibration.

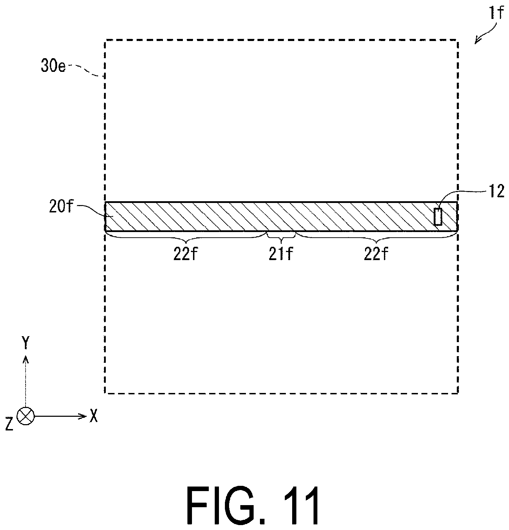

In FIG. 11, similarly to the film 20c in FIG. 10, a film 20f of the gyro vibrometer 1f has a strip shape. Both end portions of the film 20f are fixed at positions each including the center of each side of the support body 30e. The film 20f in FIG. 11 may also be said to have a form in which the peripheral region 22e with a longitudinal direction in the Y-axis direction is removed from the film 20e in FIG. 9. Although the film 20f in FIG. 11 has a smaller surface area, which receives vibration from the subject, than the film 20e in FIG. 9, the weight of the entirety of the film is reduced, which makes the film 20f likely to deform in response to vibration.

In FIGs. 5, 7, 9, and 11, the case where the shape of the support body 30e is a quadrilateral is illustrated, and the quadrilateral may be a square shape, a rectangular shape, or a parallelogram shape. In FIGs. 9 and 11, the central regions 21g and 21h may also have a square shape, a rectangular shape, or a parallelogram shape. The diagonal lines of the quadrilateral constituted by the edge of the support body and the diagonal lines of the central region do not necessarily have to overlap each other.

In FIGs. 5, 7, 9, and 11, each of the end portions of the films 20e, 20f, 20g, and 20h is fixed at a position including the center portion of one side of the quadrilateral constituted by the edge of the support body; however, the position to be fixed is not limited thereto. For example, the film may be disposed on a diagonal line of the quadrilateral constituted by the edge of the support body, and an end portion of the film may be fixed to a corner of the quadrilateral constituted by the edge of the support body.

Although not illustrated, two or more strip-shaped films may be disposed in parallel, thus not intersecting with each other.

In FIGs. 3 to 11, the shapes of the films 20a to 20h and 20j when viewed from the control substrate 40 side are described. However, returning to FIG. 2, the shape of the film when viewed from the cross section of the gyro vibrometer 1 may take, for example, a dish shape. The dish shape may be a protruding shape with respect to a subject whose vibration is to be detected, in other words, may be a recessed shape with respect to a bottom surface of the support body 30. The support body 30 according to the present embodiment includes a recessed portion 13 as described below. However, the support body 30 does not necessarily have to include the recessed portion 13 as long as the film 20 has a dish shape and a space in which the film 20 can vibrate is secured. The film 20 may be flat. That is, the film 20 may have a planar shape along the opening portion.

### Support Body 30

The support body 30 supports the film 20. As illustrated in FIG. 2, the support body 30 includes the recessed portion 13 having the opening portion 11. The recessed portion 13 may include a bottom portion. By including the bottom portion, the film 20 is unlikely to be deformed by the pressure from a side opposite to the opening portion 11 side. The depth of the recessed portion 13 is not particularly limited, but may be such a depth that the film 20 does not come into contact with the inner side surface of the recessed portion 13 when the film 20 vibrates. Thus, the film 20 and the inner side surface of the recessed portion 13 do not come into contact with each other, and the vibration of the film 20 is not obstructed by the inner side surface.

The support body 30 holds the film 20 while applying a predetermined tension to the film 20. Thus, the film 20 is not bent, and the gyro sensor 12 fixed to the film 20 may detect vibration of the film with high sensitivity.

The film 20 and the support body 30 may be fixed to each other by an adhesion portion 16. The adhesion portion 16 may be, for example, a portion composed of a known adhesive, or may be a portion where an end portion of the film 20 is fitted into the support body 30. Examples of the adhesive include a resin material such as an epoxy resin or a metal material such as solder. When a metal material is selected as the adhesive, absorption of vibration by the adhesive can be reduced, thereby making it possible to improve the vibration characteristics of the film 20. When a resin material is selected as the adhesive, transmission of vibration from the support body 30 to the film 20 can be reduced, thereby making it possible to reduce noise.

The film 20 may be fixed to the upper surface of the support body 30. The film 20 may be disposed on the inner side surface of the recessed portion 13 of the support body 30, or may be fixed to the bottom surface of the recessed portion 13 when the depth of the recessed portion 13 is small.

The material of the support body 30 is not particularly limited, but the support body 30 may be made of a material harder than the film 20, thus only the film 20 vibrates in response to vibration of the subject. Examples of the material of the support body 30 include a resin, a metal, and a ceramic.

The support body 30 may be covered with a soft substance, thus the support body 30 does not vibrate. Examples of the soft substance include silicone rubber and urethane rubber. The substance covering the support body 30 may be different from the covering portion 25 described below, and may cover only the support body 30.

### Covering Portion 25

The gyro vibrometer 1 may further include the covering portion 25 disposed between the film 20 and the subject. According to the above configuration, the film 20 provided with the gyro sensor 12 does not come into direct contact with the subject. The covering portion 25 and the film 20 may be in contact with each other, thus the covering portion 25 transmits vibration to the film 20.

The covering portion 25 may be made of the same material as or a different material from that of the film 20. The covering portion 25 may be made of, for example, a waterproof material. This makes it possible to wash the gyro vibrometer 1 and keep the gyro vibrometer 1 clean. The covering portion 25 may be made of, for example, an antibacterial material. With this, the gyro vibrometer 1 may be kept clean. Also, the covering portion 25 may be made of an adhesive material. As a result, the degree of adhesion between the gyro vibrometer 1 and the subject (for example, the body of a patient) may be improved, and vibration may be detected with high sensitivity.

### Other Films

The gyro vibrometer 1 may have a multilayer structure including films in addition to the covering portion 25 and the film 20. When the gyro vibrometer 1 has a multilayer structure, only any one layer among the multiple films may be fixed to the support body 30. When there are multiple films, the multiple films may be adhered to each other or may be located close to each other, thereby suppressing loss of the vibration of the subject. When the gyro vibrometer 1 has the multilayer structure, the materials, Young's moduli, dimensions, and the like of the respective films may be different from each other.

### Gyro Sensor 12

The gyro sensor 12 is a sensor that detects vibration emitted by a subject as an angular velocity. As depicted in FIG. 2, the gyro sensor 12 is disposed at the surface on the side covering the opening portion 11 on the film 20. With this, the gyro sensor 12 detects the vibration of the film 20 accompanying the vibration emitted by the subject.

The gyro sensor 12 may be any sensor capable of detecting vibration as an angular velocity, and may be a known gyro sensor. For example, it is a single-axis gyro sensor.

The gyro sensor 12 may include a drive arm that excites bending vibration, a detection arm that detects bending vibration, an electrode that excites the drive arm, and an electrode that converts vibration of the detection arm into an electrical signal. An example of the configuration of the gyro sensor 12 will be described later. The gyro sensor may be a crystal resonator made of crystal as a raw material.

The gyro sensor 12 and the film 20 may be fixed to each other by an adhesive, a resin coating film, or an electrical connection material such as solder, silver paste or the like.

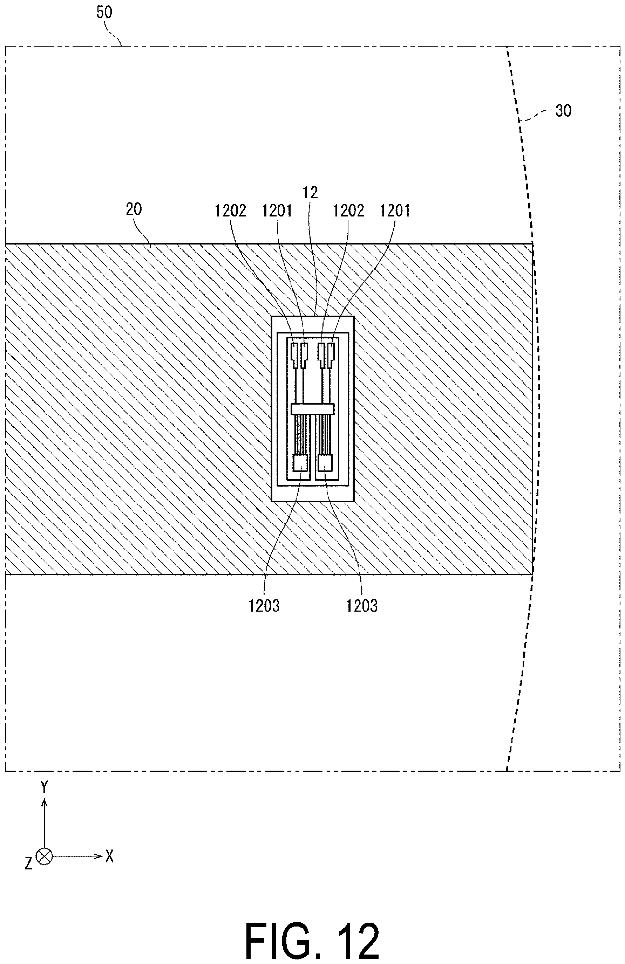

A mechanism in which the gyro sensor 12 detects the vibration of the film 20 will be described. FIG. 12 illustrates an example of the gyro sensor 12. FIG. 12 is an enlarged view of a region 50 of the film 20a in FIG. 4. The gyro sensor 12 includes drive arms 1201 and 1202, a detection arm 1203, and an anchoring portion 1204. Although not illustrated, the gyro sensor 12 may include an electrode to which a driving signal, which excites the drive arms 1201 and 1202, is input and an electrode, which converts the vibration of the detection arm 1203 into an electrical signal. The drive arms 1201, 1202 and the detection arm 1203 each have a longitudinal direction in the Y-axis direction, and are fixed to the anchoring portion 1204 having a longitudinal direction in the X-axis direction. The drive arms 1201 and 1202 are excited by bending vibration in the X-axis direction. When an angular velocity about the Z-axis is applied in a state where the bending vibration of the drive arms 1201 and 1202 is excited, the angular velocity about the Z-axis is detected by the bending vibration being detected by the detection arm 1203. Thus, the gyro sensor 12 may detect the vibration of the film 20 as the angular velocity.

From the viewpoint of detecting the vibration with high sensitivity, the gyro sensor 12 may be arranged such that the drive arms 1201, 1202 and the detection arm 1203 of the gyro sensor 12 are made to be perpendicular with respect to the longitudinal direction of the film 20a having the longitudinal direction in the X-axis direction. For example, when the gyro sensor 12 is installed on the peripheral region 22 with the longitudinal direction in the Y-axis direction in the film 20a depicted in FIG. 4, the gyro sensor 12 may be arranged such that the drive arms 1201, 1202 and the detection arm 1203 of the gyro sensor 12 are made to be perpendicular with respect to the longitudinal direction of the film 20a.

The gyro sensor 12 may be disposed at a position where a change in the inclination of the film 20 per unit time becomes the largest when the film is deformed upon receiving the vibration of the subject. The inclination of the film refers to the angle with respect to the film in an initial state without vibration. When the film 20 receives the vibration of the subject and deforms, the film exhibits an "antinode" where the amplitude is at its maximum and the displacement fluctuates most but the inclination is 0, and a "node" where the amplitude is 0 but the inclination is at its maximum. The position at which a change in the inclination of the film becomes the largest is a position of the "node". The "antinode" and the "node" appear at different positions depending on the frequency of vibration.

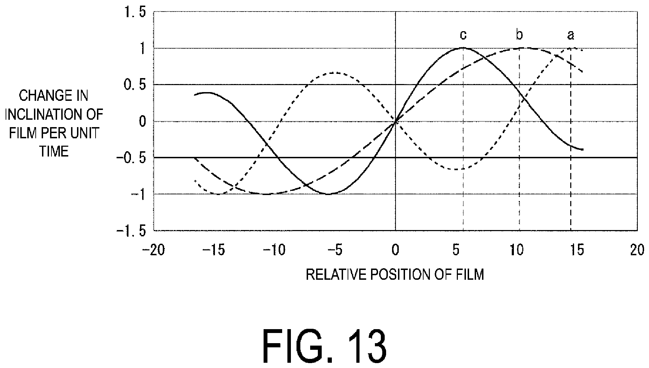

A position on the film 20 where the gyro sensor 12 is disposed will be described. FIG. 13 is a graph depicting a change in the inclination of the film per unit time in response to vibration of a predetermined frequency, where the largest value of the change in the inclination is normalized to 1. The vertical axis represents a value of the change in the inclination of the film per unit time, and the horizontal axis represents a relative position of the film 20, where the position corresponding to the "antinode" is taken as 0. The "antinode" corresponds to the center of the film 20. As an example, the dotted line represents the change in the inclination of the film in response to the vibration at a frequency of 670 Hz, the broken line represents the change in the inclination in response to the vibration at a frequency of 170 Hz, and the solid line represents the change in the inclination in response to the vibration at a frequency of 970 Hz. In the graph indicated by the dotted line, a position "a" at which the change in the inclination is at its maximum is located at a position farthest from the center of the film 20. In the graph indicated by the broken line, a position "b" at which the change in the inclination is at its maximum is closer to the center of the film 20 than the position a, and in the graph indicated by the solid line, a position "c" at which the change in the inclination is at its maximum is closest to the center of the film 20. As described above, the position of the film at which the change in the inclination of the film becomes the largest differs depending on the value of the vibration frequency. Therefore, by disposing the gyro sensor 12 at a position where the change in the inclination per unit time becomes the largest, the frequency of the vibration to be detected can be detected with high sensitivity.

The gyro vibrometer 1 may include a plurality of gyro sensors 12 disposed on the film 20 and capable of detecting respective vibrations in different frequency bands. The gyro vibrometer 1 may include the plurality of gyro sensors 12 at the positions, at each of which a change in inclination per unit time becomes the largest in the film 20 when the film 20 deforms upon receiving the vibration in a frequency band to be detected. This makes it possible to detect vibration in a wide frequency band with high sensitivity.

The gyro vibrometer 1 may include the plurality of gyro sensors 12 disposed on the film 20, and the plurality of gyro sensors 12 may be aligned on at least one radial line extending from the center of the opening portion 11. This makes it possible to detect vibrations in different frequency bands.

The gyro vibrometer 1 may include the plurality of gyro sensors 12 disposed on the film 20, and the plurality of gyro sensors 12 may be aligned along a propagation direction of the vibration of the film 20 when the displacement of the center of the film 20 becomes the largest. This makes it possible to detect vibrations in different frequency bands.

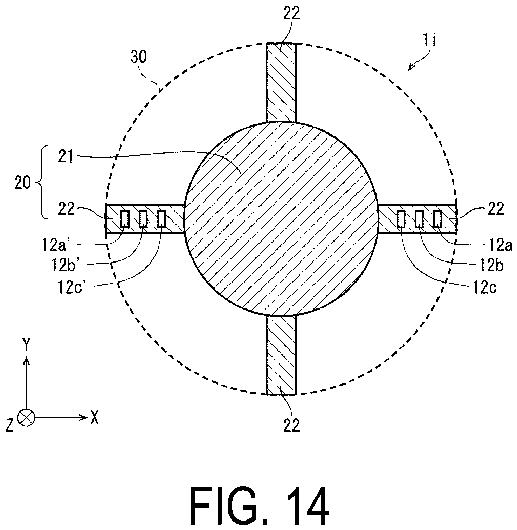

FIG. 14 is a diagram depicting a gyro vibrometer 1j and explaining positions where the gyro sensors 12 are disposed. The gyro vibrometer 1i includes gyro sensors 12a, 12b, and 12c at different positions on the peripheral region 22 in the X-axis direction. The gyro sensors 12a, 12b, and 12c are aligned on at least one radial line extending from the center of the opening portion 11, that is, the center of the central region 21. The gyro sensors 12a, 12b, and 12c may be aligned along the propagation direction of the vibration of the film 20 when the displacement of the center of the film 20 becomes the largest upon receiving the vibration from the subject. For example, the gyro sensors 12a, 12b, and 12c may be disposed at the positions corresponding to the positions a, b, and c indicated in FIG. 13, respectively. For example, the gyro sensor 12a may be disposed at a position where the change in inclination per unit time in the film 20 becomes the largest when the film 20 deforms upon receiving the vibration having a frequency of 670 Hz. The gyro sensor 12b may be disposed at a position where the change in inclination per unit time in the film 20 becomes the largest when the film 20 deforms upon receiving the vibration having a frequency of 170 Hz, and the gyro sensor 12c may be disposed at a position where the change in inclination per unit time in the film 20 becomes the largest when the film 20 deforms upon receiving the vibration having a frequency of 970 Hz. As described above, by providing the plurality of gyro sensors 12 capable of detecting vibrations in different frequency bands, vibration in a wide frequency band may be detected with high sensitivity.

The gyro vibrometer 1 may also include the gyro sensors 12 at the corresponding positions in the film 20 that take the center of the film 20 as a symmetry point. The gyro vibrometer 1i in FIG. 14 includes gyro sensors 12a', 12b', and 12c' at the corresponding positions that take the center of the film 20 as a symmetry point with respect to the gyro sensors 12a, 12b, and 12c, respectively. The gyro sensors 12a', 12b', and 12c' detect vibrations of the same frequencies as the gyro sensors 12a, 12b, and 12c, respectively, with the same sensitivity. As discussed above, the gyro vibrometer 1 may detect vibration more accurately by providing the gyro sensors 12 at the corresponding positions that take the center of the film 20 as a symmetry point.

The gyro sensor 12 may have the lowest temperature dependency of sensitivity which detects vibration at a temperature of from -40°C to 85°C. The gyro sensor 12 may have the lowest temperature dependency at a temperature of from 10°C to 85°C, and may have the lowest temperature dependency at a temperature of from 34°C to 43°C. According to the above-described configuration, the temperature dependency of the gyro sensor 12 is small at a temperature close to the body temperature of a person, and therefore vibration derived from the body of the person may be detected with high sensitivity.

### Control Substrate 40

Returning to FIG. 2, the gyro vibrometer 1 includes the control substrate 40, which controls the gyro sensor 12, where the control substrate 40 is connected to the gyro sensor 12 via a wiring line 14. The control substrate 40 is disposed in the recessed portion 13. The control substrate 40 is configured to convert the angular velocity of vibration input from the gyro sensor 12, into an electrical signal. With the configuration described above, the gyro vibrometer 1 may convert, into an electrical signal, the angular velocity of the vibration input from the gyro sensor 12.

The wiring line 14 connecting the gyro sensor 12 and the control substrate 40 has flexibility. Since the wiring line 14 has flexibility, the wiring line 14 does not obstruct the vibration of the film 20. Specific examples of the material of the wiring line 14 include rubber, CFRP, and glass fiber reinforced plastics (GFRP). In particular, by using GFRP having high flexibility, the wiring line 14 does not obstruct the vibration of the film 20, thus the vibration may be detected with high sensitivity.

The form of the wiring line 14 is not limited thereto, and the wiring line 14 may be printed on the surface of the film 20 on the side covering the opening portion 11 or on the inner wall of the support body 30. Accordingly, there is no possibility that the wiring line 14 obstructs the vibration of the film 20.

The control substrate 40 may include a communicator 41 configured to transmit a detection signal of the gyro sensor 12 to an external device. This makes it possible to transmit the detection signal of the gyro sensor 12 to the external device. A form in which the detection signal of the gyro sensor 12 is transmitted to the external device will be described in detail in a second embodiment.

### Battery 15

The gyro vibrometer 1 may include the battery 15, which supplies electricity to the control substrate 40. The battery 15 and the control substrate 40 may be connected to each other via a wiring line 17. Since the gyro vibrometer 1 includes the battery 15, there is an advantage in that the gyro vibrometer 1 is easy to carry and the place where the gyro vibrometer 1 is used is not restricted. The gyro vibrometer 1 may include a cell instead of the battery 15, or may be connected to an external power supply.

### Sound Output Unit 3

Returning to FIG. 1, the sound output unit 3 outputs sound data generated based on the detection signal of the gyro sensor 12. The sound data output by the sound output unit 3 may be, for example, sound data generated by the sound generation device 2 described below based on the detection signal of the gyro sensor 12. In FIG. 1, the sound output unit 3 is an earphone, but is not limited thereto, and may be, for example, a speaker. The sound generation device 2 and the sound output unit 3 may be connected to each other in a wired or wireless manner. From the viewpoint of portability of the sound output unit 3, the sound generation device 2 and the sound output unit 3 may be wirelessly connected to each other. Examples of the wireless connection mode include Bluetooth (registered trade name) and Wi-Fi (registered trade name). The sound output unit 3 may further include a display device. The display device may display a waveform of vibration corresponding to a sound, a spectrogram indicating the vibration, a time waveform of the vibration, a value of the vibration frequency, or the like. Examples of the display device include a display.

### Sound Generation Device 2

The sound generation device 2 generates a sound corresponding to the received detection signal. In other words, the sound generation device 2 converts an electrical signal, which is the detection signal, into sound data. The sound generation device 2 is, for example, a computer. The sound generation device 2 transmits the generated sound data. When the gyro vibrometer 1 detects vibrations of a plurality of different frequencies, the sound generation device 2 may generate a sound by integrating the detected vibrations of different frequencies at the time of generating the sound data.

The gyro vibrometer 1 and the sound generation device 2 may be connected to each other in a wired manner or in a wireless manner. The gyro vibrometer 1 and the sound generation device 2 may be wirelessly connected from the viewpoint of being capable of generating a sound corresponding to the detection signal even when they are located away from each other. When the gyro vibrometer 1 and the sound generation device 2 are wirelessly connected to each other, for example, Bluetooth (registered trade name), Wi-Fi (registered trade name), or the like may be used.

### Second Embodiment

In the present embodiment, a form of the gyro vibrometer 1 configured to remove vibration that may become noise will be described. The gyro vibrometer 1 may receive vibration from a subject and vibration from an element other than the subject. Because of this, in the detection signal, a detection signal in response to the vibration from the subject and a detection signal in response to the vibration from the element other than the subject are superimposed. The vibration from the element other than the subject may be, for example, vibration derived from movement of the support body. The movement of the support body may be, for example, movement of the hand of a user holding the gyro vibrometer 1. When the vibration from the element other than the subject is superimposed on the vibration from the subject and detected, the vibration from the subject is difficult to be correctly detected by the gyro vibrometer 1. According to the gyro vibrometer 1 of the present embodiment, a detection signal corresponding to the vibration from the element other than the subject may be removed from the detection signal.

The gyro vibrometer 1 according to the present embodiment may include a first gyro sensor and a second gyro sensor, where the first gyro sensor may be disposed on the film, and the second gyro sensor may be disposed on the film or the support body. The sound generation device 2 may generate sound data based on a first detection signal of the first gyro sensor and a second detection signal of the second gyro sensor. In this case, the sound data based on the first detection signal and the second detection signal is output to the sound output unit 3. For example, the sound generation device 2 may generate sound data by carrying out arithmetic processing such as addition, subtraction or the like on the first detection signal and the second detection signal.

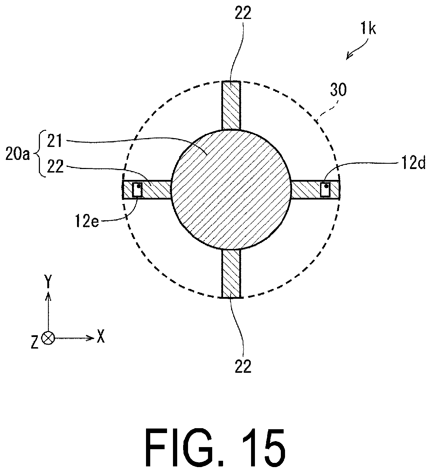

FIG. 15 is a plan view of a gyro vibrometer 1k according to an aspect of the present disclosure when viewed from the control substrate 40 side, and illustrates an example of a gyro vibrometer in which two gyro sensors are provided on the film and the two gyro sensors are oriented in the same direction. In this case, as illustrated in FIG. 12, the gyro sensor includes the drive arms 1201, 1202 and the detection arm 1203. The drive arms 1201 and 1202, and the detection arm 1203 respectively extend with opposite orientations along the longitudinal direction in a Y-axis direction. The orientations of the gyro sensors are orientations indicated by the drive arms 1201, 1202 and the detection arm 1203. Black circles in FIG. 15 denote the direction in which the drive arms 1201 and 1202 extend, as an example, to indicate the orientations of the gyro sensors. The gyro vibrometer 1k includes gyro sensors 12d and 12e in the peripheral region 22 of the film 20a. The gyro sensors 12d and 12e are disposed each having the same orientation. The gyro sensors 12d and 12e are arranged at axially symmetrical positions with respect to a line (Y-axis in FIG. 15) passing through the center of the film 20a. Since the two gyro sensors are disposed at the axially symmetrical positions, the two gyro sensors may detect vibration in the same frequency band.

In the gyro vibrometer 1k, since the two gyro sensors are disposed having the same orientation along the Y-axis direction, noise may be removed by carrying out subtraction on the detection signals corresponding to the vibrations detected by the respective gyro sensors. For example, when the support body 30 vibrates, that is, when the entirety of the gyro vibrometer 1k is vibrating, the gyro sensors 12d and 12e each detect vibration in the same frequency band. Accordingly, by removing the detection signal common to the two gyro sensors by subtraction, only the detection signal by the film 20a may be acquired.

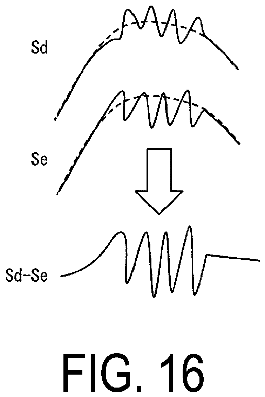

A specific example is illustrated in FIG. 16. FIG. 16 is a diagram depicting detection signals corresponding to vibrations detected by the two gyro sensors 12d and 12e, and as an example, a signal Sd is a detection signal of the gyro sensor 12d and a signal Se is a detection signal of the gyro sensor 12e. In the signal Sd and the signal Se, a signal indicated by a dotted line is a detection signal mainly corresponding to the vibration of the support body 30 and is also a detection signal common to the signal Sd and the signal Se. A signal indicated by a solid line is a detection signal mainly corresponding to the vibration of the film 20a. When the film 20a vibrates, the gyro sensor 12d and the gyro sensor 12e are inclined in opposite directions to each other accompanying the inclination of the film, and thus the detection signals obtained from the respective gyro sensors exhibit phases opposite to each other. By the signal Sd and the signal Se being subjected to subtraction (Sd - Se), the detection signal corresponding to the vibration of the support body 30 common to the signal Sd and the signal Se is removed, thus the detection signal corresponding to the vibration of the film 20a is acquired. The detection signal corresponding to the vibration of the film 20a is amplified. According to the above configuration, the detection signal corresponding to the vibration of the support body 30 is removed, and the detection signal corresponding to the vibration of the film 20a, that is, the detection signal corresponding to the vibration from the subject may be amplified and acquired.

FIGs. 15 and 16 describe an aspect in which noise is removed by carrying out subtraction on the detection signals corresponding to the vibrations detected by the two gyro sensors. When the two gyro sensors are disposed with orientations opposite to each other along the Y-axis direction, noise may also be removed by adding the detection signals of the two gyro sensors.

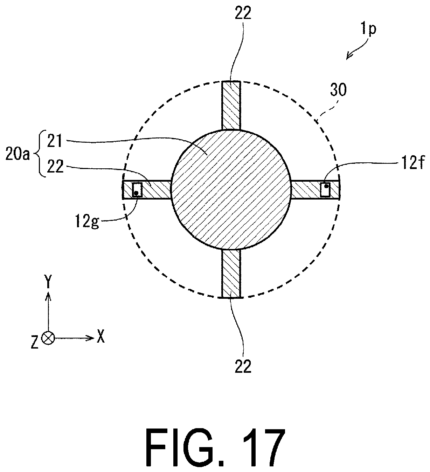

FIG. 17 is a plan view of a gyro vibrometer 1p according to an aspect of the present disclosure when viewed from the control substrate 40 side, and illustrates an example of a gyro vibrometer in which two gyro sensors 12f and 12g are provided on the film and the two gyro sensors are oriented in opposite directions along the Y-axis direction. A situation in which the orientations of the gyro sensors are opposite to each other is the same as a situation in which the gyro sensors are disposed at point-symmetrical positions that take the center of a circle constituted by the edge of the support body 30 as a symmetry point. The gyro vibrometer 1p includes the gyro sensors 12f and 12g on the peripheral region 22 of the film 20a. The gyro sensor 12f and the gyro sensor 12g have sensor orientations opposite to each other along the Y-axis direction; however, in terms of the positions at which the sensors are disposed, the gyro sensors 12f and 12g are disposed at axially symmetrical positions with respect to a line passing through the center of the film 20a (the Y-axis in FIG. 17).

In the gyro vibrometer 1p, since the orientations of the two gyro sensors 12f and 12g are opposite to each other along the Y-axis direction, noise may be removed by adding the detection signals corresponding to the vibrations detected by the respective gyro sensors. For example, when the support body 30 vibrates, that is, when the entirety of the gyro vibrometer 1p is vibrating, the gyro sensors 12f and 12g detect vibrations of the same frequency at phases opposite to each other. Accordingly, by removing the detection signal common to the two gyro sensors by addition, only the detection signal by the film 20a may be acquired.

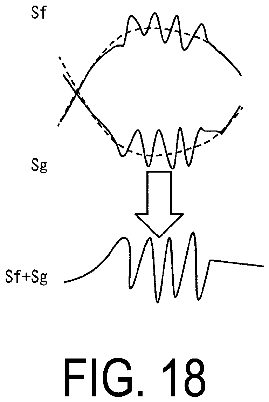

A specific example is illustrated in FIG. 18. FIG. 18 is a diagram depicting detection signals corresponding to vibrations detected by the two gyro sensors 12f and 12g, and as an example, a signal Sf is a detection signal of the gyro sensor 12f and a signal Sg is a detection signal of the gyro sensor 12g. Signals indicated by a solid line and a dotted line are the same as those in FIG. 16. As for the vibration of the support body 30, since the orientations of the gyro sensors 12f and 12g are opposite to each other, the signals indicated by the solid lines exhibit phases opposite to each other. In contrast, when the film 20a vibrates, the gyro sensor 12f and the gyro sensor 12g are inclined in opposite directions accompanying the inclination of the film, but the detection signals obtained from the respective gyro sensors exhibit the same phase because the orientations of the gyro sensors are opposite to each other. When the signal Sf and the signal Sg are added (Sf + Sg), only the detection signal corresponding to the vibration of the support body 30 common to the signal Sf and the signal Sg is removed, thus only the detection signal corresponding to the vibration of the film 20a is acquired. The detection signal corresponding to the vibration of the film 20a is amplified. According to the above configuration, the detection signal corresponding to the vibration of the support body 30, that is, noise may be removed, and the detection signal corresponding to the vibration of the film 20a, that is, the detection signal corresponding to the vibration from the subject may be amplified and acquired.

In FIGs. 15 to 18, an aspect in which two gyro sensors, that is, the first gyro sensor and the second gyro sensor are disposed axially symmetrically with respect to a line (Y-axis) passing through the center of the film 20a is described, but the two gyro sensors may be disposed at positions other than the axially symmetrical positions on the film. By the two gyro sensors being disposed at the positions other than the axially symmetrical positions, the respective gyro sensors may detect vibrations in different frequency bands.

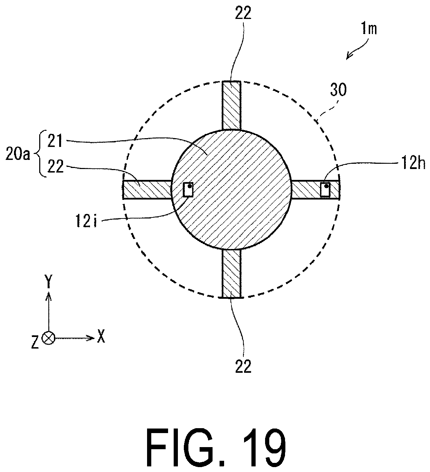

FIG. 19 is a plan view of a gyro vibrometer 1m according to an aspect of the present disclosure when viewed from the control substrate 40 side. The gyro vibrometer 1m is an example of a gyro vibrometer in which two gyro sensors 12h and 12i are provided on the film 20a and the two gyro sensors are arranged at positions other than the positions axially symmetrical with respect to a line passing through the center of the film. The gyro vibrometer 1m includes the gyro sensor 12i on the central region 21 and the gyro sensor 12h on the peripheral region 22 in the film 20a. The orientation of each gyro sensor is the same along the Y-axis direction. Since the gyro sensors 12h and 12i respectively detect vibrations in different frequency bands, a detection signal in a wide frequency band may be obtained by carrying out subtraction on the detection signals corresponding to these vibrations.

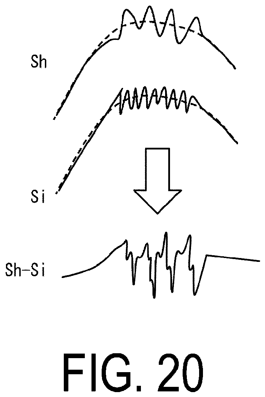

A specific example is illustrated in FIG. 20. FIG. 20 is a diagram depicting detection signals corresponding to vibrations detected by the two gyro sensors 12h and 12i, and as an example, a signal Sh is a detection signal of the gyro sensor 12h and a signal Si is a detection signal of the gyro sensor 12i. Signals indicated by a solid line and a dotted line are the same as those in FIG. 16. Similarly to the case of the gyro vibrometer 1k described above, when the film 20a vibrates, the gyro sensor 12h and the gyro sensor 12i are inclined in opposite directions to each other accompanying the inclination of the film, and thus the detection signals obtained from the respective gyro sensors exhibit phases opposite to each other. Since the gyro sensors 12h and 12i respectively detect vibrations in different frequency bands, by the signal Sh and the signal Si being subjected to subtraction (Sh - Si), only the detection signal corresponding to the vibration of the support body 30 common to the signal Sh and the signal Si is removed. Thus, the detection signal corresponding to the vibration of the film 20a includes two frequency bands. According to the above configuration, the detection signal corresponding to the vibration of the support body 30, that is, noise may be removed, and the detection signal corresponding to the vibration of the film 20a, that is, the detection signal in a wide frequency band corresponding to the vibration from the subject may be acquired.

In FIGs. 15 to 20, an aspect in which two gyro sensors, that is, the first gyro sensor and the second gyro sensor are disposed on the film is described, but one of the two gyro sensors may be disposed on the support body.

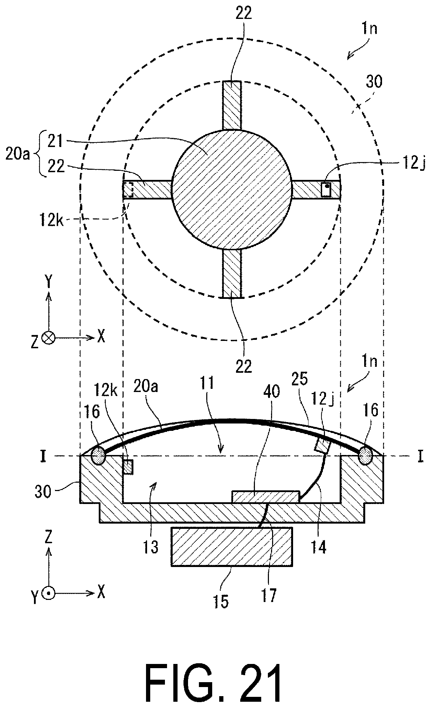

FIG. 21 is a plan view of a gyro vibrometer 1n according to an aspect of the present disclosure when viewed from the control substrate 40 side, and illustrates an example of a gyro vibrometer in which one gyro sensor is disposed on the film and one gyro sensor is disposed on the support body. The gyro vibrometer 1n includes a gyro sensor 12j on the peripheral region 22 of the film 20a and a gyro sensor 12k on a side wall of the support body 30.

Since the gyro vibrometer 1n includes the gyro sensors on the film 20a and the support body 30, by subtracting the detection signal corresponding to the vibration of the support body 30 from the detection signal corresponding to the vibration of the film 20a to remove an unwanted signal, only the detection signal by the film 20a may be acquired.

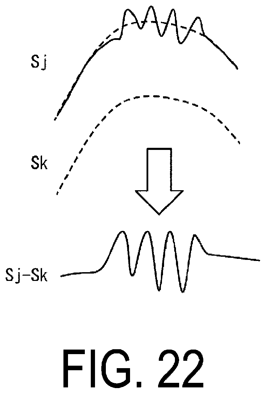

A specific example is illustrated in FIG. 22. FIG. 22 is a diagram depicting detection signals corresponding to vibrations detected by the two gyro sensors 12j and 12k, and as an example, a signal Sj is a detection signal of the gyro sensor 12j and a signal Sk is a detection signal of the gyro sensor 12k. Signals indicated by a solid line and a dotted line are the same as those in FIG. 16. Since the signal Sk is a detection signal mainly corresponding to the vibration of the support body 30, when the signal Sj and the signal Sk are subjected to subtraction (Sj - Sk), the detection signal corresponding to the vibration of the support body 30 common to the signal Sj and the signal Sk is removed, thus the detection signal corresponding to the vibration of the film 20a is acquired. According to the above configuration, the detection signal corresponding to the vibration of the support body 30 is removed, and the detection signal corresponding to the vibration of the film 20a, that is, the detection signal corresponding to the vibration from the subject may be acquired.

The gyro vibrometer including two gyro sensors is described in the above aspect, but the number of gyro sensors is not limited thereto. For example, one gyro sensor is provided on each of the four peripheral regions 22 of the film 20a, that is, a total of four gyro sensors are provided, and the detection signals of two gyro sensors located at symmetrical positions with respect to an X-axis and the detection signals of two gyro sensors located at symmetrical positions with respect to the Y-axis may be subjected to addition or subtraction. Further, for example, multiple gyro sensors are provided on the peripheral region 22 illustrated in FIG. 14, and the detection signals of the gyro sensors 12a and 12b adjacent to each other may be subjected to addition or subtraction.

According to the aspects described in the present embodiment, a gyro vibrometer having high detection sensitivity without noise may be achieved. When the detection sensitivity of the gyro vibrometer is improved as described above, a respiratory sound such as a 200-Hz component, which is unrecognizable by the auditory sense, may be detected by imaging the detection signal, for example. In the electronic system 1000 or in an electronic system 1000a described below, the detection signal of the first gyro sensor and the detection signal of the second gyro sensor may be output without being calculated in the control substrate 40 of the gyro vibrometer 1, and may be subjected to addition or subtraction by the sound generation device 2.

### Third Embodiment

### Electronic System 1000a

Another embodiment of the present disclosure will be described below. For convenience of description, a member having the same function as that of a member described in the embodiments described above is denoted by the same reference sign, and description thereof will not be repeated.

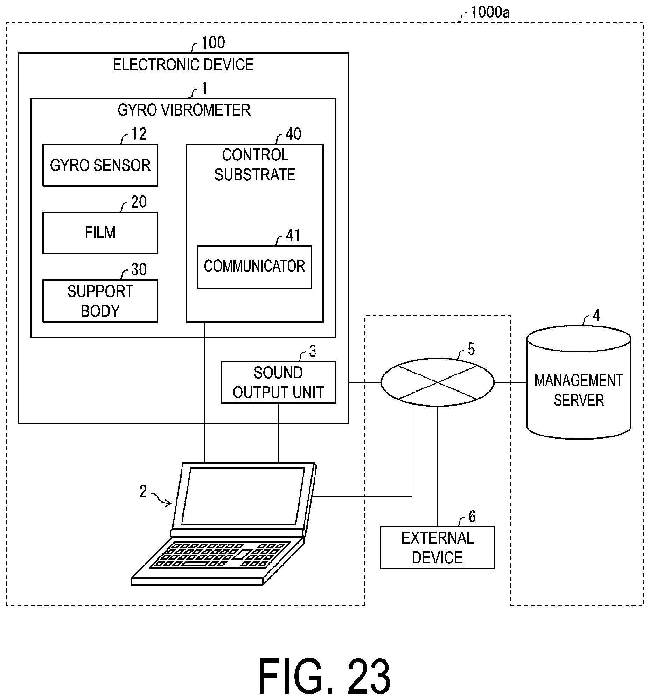

The electronic device 100 and the sound generation device 2 may be connected to a communication network 5. The electronic system 1000a having the above-described configuration will be described using FIG. 23. FIG. 23 is a block diagram illustrating an overall configuration of the electronic system 1000a.

The electronic system 1000a includes at least one electronic device 100, at least one sound generation device 2, and a management server 4. FIG. 23 illustrates an example in which the electronic device 100 and the sound generation device 2 are connected to the communication network 5, but the present disclosure is not limited thereto. For example, only the sound generation device 2 needs to be connected to the communication network 5.

### Management Server 4

The management server 4 acquires the detection signal and/or the sound data from the electronic device 100 or the sound generation device 2, and stores therein the acquired detection signal and/or sound data. The management server 4 may be capable of delivering the stored detection signal and/or sound data to an external device 6.

According to the above configuration, the electronic system 1000a may deliver the detection signal or the sound data to the external device. This makes it possible to utilize the detection signal or the sound data in the external device 6. In this case, the external device 6 may be, for example, a computer in a facility where the electronic device 100 is disposed, or a computer installed in a place different from the facility where the electronic device 100 is disposed.

The management server 4 may store the acquired sound data in association with at least one piece of information selected from the group consisting of first information indicating the date and time when the sound data was acquired, second information related to a subject corresponding to the sound data, and third information related to a source of the sound data. The management server 4 may deliver the stored detection signal and/or sound data to the external device 6 together with at least one piece of information selected from the group consisting of the first information, the second information, and the third information.

Here, the first information may be the date and time when the sound generation device 2 received the detection signal instead of the date and time when the sound data was acquired.

When the subject is a patient, examples of the second information related to the subject corresponding to the sound data include the name of a disease caught by the patient, attributes of the patient (for example, age, sex, height, and weight), and numerical values related to vital signs of the patient (for example, body temperature and blood pressure). The third information related to the source of the sound data may be identification information (for example, a facility ID) unique to the medical facility as the transmission source of the sound data, identification information (for example, a healthcare practitioner ID) unique to the healthcare practitioner who has examined the patient, or the like.

When the subject is a machine, examples of the second information related to the subject corresponding to the sound data include the name, the manufacturer, the model number, and the date of manufacture of the machine. Examples of the third information related to the source of the sound data may include information indicating the name, location, and contact address (for example, an e-mail address) of the facility as the transmission source of the sound data.

For example, the external device 6 having received the delivery of the sound data from the electronic system 1000a receives, along with the sound data, at least one piece of information selected from the group consisting of the first information, second information, and third information associated with the sound data. Thus, a user (for example, a healthcare practitioner or a laboratory technician) who uses the sound data delivered to the external device 6 may correctly understand the meaning and the feature of the sound data and utilize the sound data.

In response to reception of an analysis request from the external device 6, the management server 4 may transmit the analysis result obtained by analyzing the acquired detection signal and/or the acquired sound data to the external device 6 serving as the transmission source of the analysis request.

For example, with respect to the management server 4, the external device 6 may receive, from the management server 4, the analysis result regarding the sound data stored in the management server 4. As a result, the electronic system 1000a may assist a user (for example, a healthcare practitioner or a laboratory technician) of the external device 6 in utilizing the sound data.

In the present disclosure, the invention has been described above based on the various drawings and examples. However, the invention according to the present disclosure is not limited to each embodiment described above. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, a person skilled in the art can easily make various variations or modifications based on the present disclosure. Note that these variations or modifications are included within the scope of the present disclosure.

### REFERENCE SIGNS

1, 1a to 1k, 1m, 1n, 1p Gyro vibrometer
2 Sound generation device
3 Sound output unit
4 Management server
11 Opening portion
12, 12a to 12k, 12a' to 12c' Gyro sensor
13 Recessed portion
14 Wiring line
20, 20a to 20h, 20j Film
21, 21a to 21h, 21j Central region
22, 22a to 22h, 22j Peripheral region
25 Covering portion
30, 30e Support body
40 Control substrate
41 Communicator
100 Electronic device
1000, 1000a Electronic System

## Claims

1. A gyro vibrometer, comprising:
a support body comprising an opening portion;
a film disposed on the support body in which part of the film is located over the opening portion; and
at least one gyro sensor disposed on a surface on the opening side of the film.

2. The gyro vibrometer according to claim 1,
wherein
the support body comprises a recessed portion comprising the opening portion.

3. The gyro vibrometer according to claim 2, further comprising:
a control substrate connected to the gyro sensor via a wiring line, wherein the control substrate is disposed in the recessed portion, and
the wiring has flexibility.

4. The gyro vibrometer according to claim 3,
wherein
the control substrate comprises a communicator configured to transmit a detection signal of the gyro sensor to an external device.

5. The gyro vibrometer according to any one of claims 1 to 4, wherein
the film covers part of the opening portion.

6. The gyro vibrometer according to any one of claims 1 to 5, wherein
the film comprises a central region covering a center of the opening portion and a peripheral region extending from the central region to the support body.

7. The gyro vibrometer according to claim 6, wherein
the peripheral region extends in a strip shape from the central region to the support body.

8. The gyro vibrometer according to claim 7, wherein
the central region is harder than the peripheral region.

9. The gyro vibrometer according to any one of claims 1 to 8, wherein
the support body holds the film while applying a predetermined tension to the film.

10. The gyro vibrometer according to any one of claims 1 to 9, wherein
the gyro sensor is disposed at a position where a change in inclination per unit time in the film becomes largest when the film is deformed upon receiving vibration of a subject.

11. The gyro vibrometer according to any one of claims 1 to 10, further comprising:
a plurality of the gyro sensors disposed on the film and configured to detect each of the vibrations in different frequency bands, wherein
each of the plurality of gyro sensors is disposed at a position where a change in inclination per unit time in the film becomes largest when the film is deformed upon receiving vibration in a frequency band to be detected.

12. The gyro vibrometer according to any one of claims 1 to 9, further comprising:
a plurality of the gyro sensors disposed on the film, wherein
the plurality of gyro sensors are aligned on at least one radial line extending from the center of the opening portion.

13. The gyro vibrometer according to any one of claims 1 to 9, further comprising:
a plurality of the gyro sensors disposed on the film, wherein
the plurality of gyro sensors are aligned along a propagation direction of the vibration of the film when displacement of the center of the film becomes largest.

14. The gyro vibrometer according to any one of claims 1 to 13, further comprising:
a covering portion disposed between the film and a subject.

15. The gyro vibrometer according to any one of claims 1 to 14, wherein
the gyro sensor has the smallest temperature dependency of sensitivity to detect vibration at a temperature of from 34°C to 43°C.

16. An electronic device, comprising:
the gyro vibrometer according to any one of claims 1 to 15; and
a sound output unit configured to output sound data generated based on a detection signal of the gyro sensor.

17. The electronic device according to claim 16, wherein
the gyro sensor comprises a first gyro sensor disposed on the film and a second gyro sensor disposed on the film or the support body, and
the sound output unit outputs sound data generated based on detection signals of the first gyro sensor and the second gyro sensor.

18. An electronic system, comprising:
at least one electronic device according to claim 17;
at least one sound generation device configured to generate sound data based on a detection signal received from the gyro vibrometer of the electronic device and transmit the generated sound data to the electronic device; and
a management server configured to acquire the detection signal and/or the sound data from the electronic device or the sound generation device and store the acquired detection signal and/or sound data, wherein
the management server is configured to deliver the stored detection signal and/or the stored sound data to an external device.

19. An electronic system, comprising:
an electronic device provided with
the gyro vibrometer according to claim 1, and
a sound output unit configured to output sound data generated based on a detection signal of the gyro sensor;
at least one sound generation device configured to generate sound data based on a detection signal received from the gyro vibrometer of the electronic device and transmit the generated sound data to the electronic device; and
a management server configured to acquire the detection signal and/or the sound data from the electronic device or the sound generation device, and store the acquired detection signal and/or sound data, wherein
the management server is configured to deliver the stored detection signal and/or the stored sound data to an external device,
the gyro vibrometer comprises a first gyro sensor and a second gyro sensor,
the first gyro sensor is disposed on the film, and the second gyro sensor is disposed on the film or the support body, and
the sound generation device generates the sound data based on a detection signal of the first gyro sensor and a detection signal of the second gyro sensor.

20. The electronic system according to claim 18 or 19, wherein
the management server
stores the acquired sound data in association with at least one piece of information selected from the group consisting of first information indicating a date and time when the sound data was acquired, second information related to a subject corresponding to the sound data, and third information related to a source of the sound data, and
delivers the stored detection signal and/or the stored sound data together with at least one piece of information selected from the group consisting of the first information, the second information, and the third information to the external device.

21. The electronic system according to any one of claims 18 to 20, wherein
the management server transmits, in response to reception of an analysis request from the external device, an analysis result obtained by analyzing the acquired detection signal and/or the acquired sound data to the external device serving as a transmission source of the analysis request.
